# EUROPÄISCHE PATENTSCHRIFT

(11) **EP 3 919 387 B1**
(45) Veröffentlichungstag und Bekanntmachung des Hinweises auf die Patenterteilung: **27.09.2023**
(21) Anmeldenummer: 21175317.3
(22) Anmeldetag: 21.05.2021
(51) Int. Cl.: B64D 11/04, B64D 11/00, A62C 3/08

(54) **VORRICHTUNG UND SYSTEM ZUM HANDHABEN GEFÄHRLICHER OBJEKTE IN EINER GESCHLOSSENEN FAHRZEUGKABINE**
DEVICE AND SYSTEM FOR HANDLING DANGEROUS OBJECTS IN AN ENCLOSED VEHICLE CAB
DISPOSITIF ET SYSTÈME DE MANUTENTION DES OBJETS DANGEREUX DANS UNE CABINE FERMÉE DE VÉHICULE

(30) Priorität: 05.06.2020 DE 102020114942
(43) Veröffentlichungstag der Anmeldung: 08.12.2021
(73) Patentinhaber: Airbus Operations GmbH, 21129 Hamburg (DE)
(72) Erfinder: MUIN, Andrew, 21129 Hamburg (DE); SEGELHORST, Hendrik, 21129 Hamburg (DE)
(74) Vertreter: LKGLOBAL Lorenz & Kopf Patentanwalt Attorney at Law PartG mbB

(56) Entgegenhaltungen:
- EP-A1- 3 225 284
- WO-A1-03/041803
- DE-U1-202015 106 958
- US-A1- 2014 209 332
- US-B1- 9 339 671

## Beschreibung

### TECHNISCHES GEBIET

Die Erfindung betrifft eine Vorrichtung und ein System zum Handhaben gefährlicher Objekte in einer geschlossenen Fahrzeugkabine.

### HINTERGRUND DER ERFINDUNG

Bei Reisen in einem Verkehrsflugzeug ist die darin befindliche Passagierkabine üblicherweise geschlossen. Falls unerwartet gefährliche Objekte, beispielsweise überhitzte elektronische Geräte oder beschädigte Hochleistungsakkus, innerhalb der Passagierkabine gehandhabt werden müssen, können diese nicht unmittelbar aus der Passagierkabine entfernt werden, um eine davon ausgehende Gefahr einzudämmen. Beispielsweise ist bekannt, dass moderne elektronische Geräte mit einem auf Lithium-Ionen basierenden Energiespeicher durch Überbeanspruchung oder durch kleine Defekte zu einer Feuer- und Rauchentwicklung führen. Je nach Betreiber des Flugzeugs können Richtlinien für Besatzungsmitglieder erlassen werden, wie Feuer an Bord der Flugzeugkabine zu bekämpfen sind. Gänzlich vermeiden ließen sich derartige Situationen nur durch entsprechende Verbote, Lithium-Ionen-Akkus mit in die Passagierkabine zu führen. Dies würde allerdings zu einer deutlichen Einschränkung des Passagierkomforts führen.

WO 03/041803 A1 zeigt einen feuerfesten Behälter zur Befestigung an einer Oberfläche einer Tür oder Wand in der Nähe eines Briefkastens oder einer anderen Öffnung, wobei der Behälter aus einer flexiblen Faserstoffbahn hergestellt ist, die auf mindestens einer ihrer Oberflächen mit einem Material beschichtet oder ausgekleidet ist, das in Gegenwart von Feuer anschwillt. Eine längliche Öffnung ist so dimensioniert und geformt, dass sie die Öffnung der Tür oder Wand ergänzt. Ein Metallrahmen ist um die längliche Öffnung des Behälters herum an der Stoffbahn befestigt. Ein zu öffnender Deckel mit einer nach unten vorspringenden Lippe, die in ihrer geschlossenen Stellung über dem oberen Rand des Behälters liegt und ihn berührt ist vorgesehen, wobei die Anordnung so getroffen ist, dass im Falle des Einbringens von brennendem Material in den Behälter die Beschichtung oder Auskleidung sofort anschwillt, um das Innere des Behälters abzudichten und den Austritt von Feuer in das Gebäude zu verhindern.

US 2014/209332 A1 zeigt ein Feuer- und Raucheindämmungs- und -löschgerät, aufweisend einen Behälter, der an allen Seiten mit Ausnahme einer reversibel verschließbaren Seite dauerhaft verschlossen ist. Der Behälter weist eine innere Aussparung auf, die durch zwei oder mehr Wände definiert ist, welche durch die dauerhaft verschlossenen Seiten gebildet werden. Die innere Aussparung ist so groß, dass eine batteriebetriebene Vorrichtung einführbar ist, die Feuer, Rauch, giftige Dämpfe und dergleichen erzeugt. Der Behälter verhindert das Austreten von Feuer, Rauch und Dämpfen in die Umgebung.

EP 3 225 284 A1 zeigt eine flexible Tasche mit einem Innenfach zur Aufnahme eines heißen und/oder brennenden Gegenstands, wobei die Tasche roll- und/oder faltbar ist, und wobei die Tasche eine Öffnung zum Einbringen des Gegenstands in das Innenfach der Tasche aufweist. Erfindungsgemäß ist an dem der Öffnung entgegengesetzten Drittel der Tasche ein von außen zugängliches Außenfach vorgesehen, in dem ein Feuerlöscher zur Aufnahme und Abgabe eines Feuerlöschmittels untergebracht ist.

### ZUSAMMENFASSUNG ERFINDUNG

Es ist die Aufgabe der Erfindung, eine Vorrichtung vorzuschlagen, die es ermöglicht, gefährliche Objekte an Bord einer Flugzeugkabine gut handhaben und zumindest für die Dauer des Fluges an Bord unschädlich machen zu können.

Die Aufgabe wird gelöst durch eine Vorrichtung mit den Merkmalen des unabhängigen Anspruchs 1. Vorteilhafte Ausführungsformen und Weiterbildungen sind den Unteransprüchen und der nachfolgenden Beschreibung zu entnehmen.

Es wird eine Vorrichtung zum Handhaben gefährlicher Objekte in einer geschlossenen Fahrzeugkabine vorgeschlagen, aufweisend eine Halteplatte zum Befestigen der Vorrichtung, eine an der Halteplatte angeordnete kompaktierbare Gehäusewandung aus einem feuerfesten Material, und einen zumindest mit der Gehäusewandung verbundenen Öffnungsrahmen mit einer verschließbaren Öffnung, wobei die kompaktierbare Gehäusewandung in einen kompaktierten Zustand und in einen expandierten Zustand bringbar ist, wobei die Gehäusewandung mit der Halteplatte und dem Öffnungsrahmen im ausgefalteten Zustand einen Hohlraum bereitstellt, der durch die Öffnung von außerhalb der Gehäusewandung erreichbar ist.

Die erfindungsgemäße Vorrichtung stellt demgemäß eine einfache Möglichkeit dar, ein in der Flugzeugkabine befestigbares Behältnis bereitzustellen, das feuerfest ist und unmittelbar zum sicheren Aufnehmen gefährlicher Objekte geeignet ist. Eine Feuergefahr kann dadurch wirksam unterbunden werden. Es sind zudem klare und eindeutige Richtlinien möglich, wie mit gefährlichen Objekten in der Flugzeugkabine umzugehen ist. Die Vorrichtung kann an beliebigen Stellen innerhalb der Kabine angeordnet werden, beispielsweise in einem Bereich angrenzend an eine Flugzeugküche, in einer Flugzeugküche, an einem Kabinentrolley, in einem Türbereich, an einem anderen Monument oder an sonstigen geeigneten Orten. Der besondere Vorteil liegt darin, dass sofort und unmittelbar eine von dem betreffenden Objekt ausgehende Gefahr unterbunden wird und auch bei längeren Flugdauern eine sichere Aufbewahrung des betreffenden Objekts möglich ist.

Die Vorrichtung besteht im Wesentlichen aus drei Hauptkomponenten. Diese sind die Halteplatte, die kompaktierbare Gehäusewandung sowie der Öffnungsrahmen. Sie bilden zusammen ein Behältnis, das bedarfsweise kompaktiert oder expandiert werden kann. Bevorzugt ist in einem kompaktierten Zustand die Vorrichtung so klein, dass sie nur einen unwesentlichen Bauraum innerhalb der Flugzeugkabine beansprucht. In einem expandierten Zustand muss sie allerdings keine besonders großen Abmessungen aufweisen, sondern lediglich ein sicheres Behältnis zur Aufnahme kleinerer Objekte bereitstellen. Es ist vorstellbar, dass in der Vorrichtung ein Hohlraum mit einem Volumen bereitgestellt wird, das in einem Bereich von etwa 1 l bis etwa 10 1 liegen könnte. Gegebenenfalls können auch größere Vorrichtungen bereitgestellt werden. Für größere Flugzeugkabinen wäre auch denkbar, zwei oder mehr derartige Vorrichtungen vorzusehen.

Die Halteplatte dient als eine Basis der Vorrichtung und muss nicht zwangsläufig fest mit der Gehäusewandung und dem Öffnungsrahmen verbunden sein. Sie dient vielmehr der Aufnahme der Gehäusewandung und der anderen Komponenten der Vorrichtung, um diese an dem vorgesehenen Ort anzubinden.

Die kompaktierbare Gehäusewandung weist ein feuerfestes Material auf. Das Material könnte beispielsweise dazu ausgebildet sein, dauerhaft einer vorgebbaren Temperatur zu widerstehen. Die Temperatur könnte etwa bei 300°C liegen. Es könnte weiterhin ein Material umfassen, welches zumindest über eine vorgebbare zeitliche Dauer einer etwas höheren Temperatur widersteht, beispielsweise eine Temperatur von etwa 350°C, 400°C oder mehr. Das Material könnte etwa Kevlar umfassen, das leicht, schnittfest und stichfest ist. Auch rasch in die Vorrichtung gegebene Objekte, die möglicherweise scharfkantig sind, würden die Gehäusewandung nicht verletzen.

Die Gehäusewandung könnte beispielsweise eine Zickzack-Faltung aufweisen, durch die sie aufgefächert oder zusammengelegt werden kann. Es könnten alternativ auch starre Segmente eingesetzt werden, welche zueinander verschwenkbar, klappbar, teleskopierbar oder verschiebbar sind. Die Gehäusewandung weist einen Seitenabschnitt auf, an dem der Öffnungsrahmen angeordnet ist. Der Seitenabschnitt ist dabei offen und wird von dem Öffnungsrahmen eingefasst.

Der Öffnungsrahmen weist eine Öffnung auf, welche von einem Benutzer mithilfe einer Abdeckklappe oder ähnlichem verschließbar ist. Bei verschlossener Öffnung ist die Vorrichtung ebenso vollständig geschlossen. Wird die Öffnung nach außen hin zugänglich gemacht, können Gegenstände durch die Öffnung und den offenen Seitenabschnitt in den Innenraum der Gehäusewandung gebracht werden. An einer zu dem Öffnungsrahmen gegenüberliegenden Seite der Gehäusewandung könnte eine Bodenfläche vorgesehen sein, die aus der Gehäusewandung selbst oder einem separaten Bauteil gebildet wird.

Tritt beispielsweise während eines Fluges in der Flugzeugkabine eine Situation auf, in der ein gefährliches Objekt an einen sicheren Ort gebracht werden muss, könnte Bordpersonal mit einer Hand und einer geeigneten Vorrichtung, beispielsweise einer Greifzange, einem Handschuh oder dergleichen, das Objekt nehmen und mit der anderen Hand beispielsweise die Vorrichtung ausfalten und anschließend den Gegenstand hineinlegen. Nach dem Verschließen der Öffnung geht von dem Objekt keine Gefahr mehr aus, eine starke Hitzeentwicklung des Objekts würde die Vorrichtung nicht beschädigen.

Die Gehäusewandung und der Öffnungsrahmen können im kompaktierten Zustand flach auf der Halteplatte aufliegen. Das flache Aufliegen ermöglicht, die erfindungsgemäße Vorrichtung stets in der Flugzeugkabine mitzuführen, ohne dass hierdurch signifikant Bauraum verloren geht oder die Vorrichtung bei üblichen Abläufen in der Flugzeugkabine, etwa bei der Zubereitung von Speisen und Getränken, stört. Neben der Möglichkeit, brennende oder stark erhitzte Objekte aufzunehmen, könnten auch giftige Insekten oder ähnliches, die versehentlich durch Kleidung oder Gepäck in die Flugzeugkabine geraten, aufgenommen werden.

Eine vorteilhafte Ausführungsform weist ferner eine mit der Gehäusewandung verbundene Bodenplatte auf. Die Bodenplatte könnte von ihrer Ausgestaltung dem Öffnungsrahmen entsprechen, ohne jedoch eine Öffnung aufzuweisen. Die Gehäusewandung spannt sich in dem expandierten Zustand dann von der Bodenplatte zu dem Öffnungsrahmen hin. Die Gehäusewandung könnte zumindest an drei Seitenflächen geschlossen sein, die von der Halteplatte aus die Bodenplatte und den Öffnungsrahmen umlaufen. Bevorzugt sind die Flächen eben und bilden daher im expandierten Zustand im Wesentlichen einen Quader aus.

Der Öffnungsrahmen ist schwenkbar an der Halteplatte angeordnet. Der Öffnungsrahmen könnte beispielsweise in einem kompaktierten Zustand der Vorrichtung in einer horizontalen Position an einer vertikal angeordneten Halteplatte ausgerichtet sein. In dem kompaktierten Zustand könnte der Öffnungsrahmen indes bündig auf der Halteplatte aufliegen. Durch die Schwenkbewegung von der einen Position in die andere Position könnte die Gehäusewandung der Öffnungsbewegung des Öffnungsrahmens folgen und sich dabei entweder ausfalten oder kompaktieren.

Es ist analog dazu weiterhin vorteilhaft, wenn die Bodenplatte schwenkbar gegenüberliegend des Öffnungsrahmen an der Halteplatte angeordnet ist. Zum Kompaktieren der Vorrichtung könnten demgemäß der Öffnungsrahmen und die Bodenplatte jeweils in entgegengesetzte oder zueinander gewandte Richtungen schwenken, durch die sich die Bodenplatte bzw. der Öffnungsrahmen einander und der Halteplatte annähern. Bei einer umgekehrten Bewegung entfernen sich der Öffnungsrahmen und die Bodenplatte voneinander und die vorher kompaktierte Gehäusewandung wird dadurch aufgezogen, um den Hohlraum bereitzustellen. Zum Halten der Bodenplatte und des Öffnungsrahmens in dem kompaktierten Zustand könnte es sinnvoll sein, an den zueinander gewandten Begrenzungskanten dieser beiden Komponenten einen Magnet- oder Rastverschluss anzuordnen.

In einer vorteilhaften Ausführungsform ist die Gehäusewandung faltbar und weist mehrere miteinander verbundene Wandungssegmente auf. Die Wandungssegmente können steif und plattenförmig sein. Denkbar ist allerdings auch eine eher textile Struktur mit einer integrierten Faltung.

In einer besonders vorteilhaften Ausführungsform weisen der Öffnungsrahmen und die Bodenplatte weitgehend dieselbe Grundfläche auf. Die Vorrichtung kann demgemäß symmetrisch ausgeführt sein und die Gehäusewandung kann sich mit einer gleichbleibenden Grundfläche zwischen dem Öffnungsrahmen und der Bodenplatte erstrecken.

Bevorzugt weist die Gehäusewandung ein mit Kevlar verstärktes Material auf. Das Material ist folglich ausreichend robust und für den vorgesehenen Zweck ausreichend feuerfest. Es kann frequentiert verwendet werden und weist kein hohes Gewicht auf.

In einer vorteilhaften Ausführungsform weist die Halteplatte ein lösbares Befestigungselement zum Anordnen an einem Objekt auf. Dies könnte sich beispielsweise auf einen Haken oder eine Ausnehmung zum Aufstecken der Halteplatte auf einen Haken beschränken. Es könnte sinnvoll sein, die Halteplatte so anzuordnen, dass sie beispielsweise vertikal von einem Haken oder einer anderen Einrichtung, die an einer Wand in der Flugzeugkabine angeordnet ist, herunter hängt.

Es ist vorteilhaft, wenn die Vorrichtung ferner ein in den Hohlraum einbringbares Granulat zum Löschen eines Feuers in dem Hohlraum aufweist. Das Granulat könnte beispielsweise ein Löschgranulat aus Blähglas sein, welches insbesondere für Brände von metallhaltigen und insbesondere lithiumhaltigen Energiespeichern geeignet ist. Es entwickelt beim Löschen keine giftigen Gase und wird zur Anwendung beispielsweise aus einem Beutel in den Hohlraum auf das betreffende Objekt geschüttet.

Weiterhin ist es sinnvoll, wenn der Öffnungsrahmen aus einem feuerfesten Material besteht. Dies könnte beispielsweise ein metallisches Material sein, wie etwa eine besondere Stahllegierung.

Die erfindungsgemäße Vorrichtung kann ferner eine Greifzange und einen Halter zum Haltern der Greifzange an einer Außenseite der Vorrichtung aufweisen. Die Greifzange ist sinnvoll, um Objekt mit einer stark erhöhten Temperatur zu greifen, um eine Verletzungsgefahr zu verhindern. Weiterhin ist denkbar, ein Insekt oder anderes Tier, welches unbeabsichtigt in die Flugzeugkabine gelangt ist, sicher aufzunehmen. Die Greifzange könnte bevorzugt seitlich an der Vorrichtung mittels eines Hakens, eines Schnapphalters oder dergleichen angeordnet sein.

In einer bevorzugten Ausführungsform kann die Vorrichtung ferner ein verschließbares Fach zum Aufbewahren eines feuerfesten Handschuhs aufweisen. Der Handschuh könnte ebenso Kevlar aufweisen und kann ein vorteilhaftes Greifen eines erhitzten Gegenstands erlauben, der mit der Greifzange schlecht greifbar ist.

Es ist vorteilhaft, wenn der ausgefaltete Zustand formstabil ist, sodass die Vorrichtung in dem ausgefalteten Zustand selbstständig steht. Die Vorrichtung kann auch unabhängig von einer Halterung an einer Wand eingesetzt werden. Sie könnte aufgefaltet und auf den Boden oder eine andere Fläche gestellt werden. Es ist möglich, hierzu weiterhin eine Aufstandsfläche zu definieren, die sich von der Halteplatte oder einer anderen rückwärtigen Wandung der Vorrichtung erstreckt, um die Vorrichtung aufzustellen.

Weiterhin ist vorstellbar, dass eine arretierbare Strebe zwischen dem Öffnungsrahmen und der Bodenplatte positionierbar ist, die beide Elemente in der geöffneten Position halten kann. Die Strebe könnte dazu ausgebildet sein, beim Expandieren der Vorrichtung selbstständig einzurasten.

Die Erfindung betrifft schließlich ein System zum Handhaben gefährlicher Objekte in einer geschlossenen Flugzeugkabine, aufweisend einen Kabinentrolley und mindestens eine Vorrichtung nach einem der vorhergehenden Ansprüche, wobei der Kabinentrolley eine Haltevorrichtung aufweist, in die Halteplatte der Vorrichtung einhängbar ist.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt einen Kabinentrolley mit einer Vorrichtung zum Handhaben gefährlicher Objekte in einem kompaktierten Zustand.
Fig. 2 und 3 zeigen den Kabinentrolley mit einer Vorrichtung zum Handhaben gefährlicher Objekte in einem expandierten Zustand.
Fig. 4 zeigt den Kabinentrolley mit einer Halteplatte und einer davon getrennten Vorrichtung.
Fig. 5 zeigt die Vorrichtung mit Greifzange und Handschuhen.
Fig. 6 zeigt die Vorrichtung in verschiedenen Ausführungen in Seitenansichten.
Fig. 7 zeigt ein Kabinenmonument mit darin angeordnetem Trolley nach Fig. 1.
Fig. 8 offenbart die Handhabung eines Objekts.
Fig. 9 und 10 zeigen das Löschen des Objekts in der Vorrichtung.
Fig. 11 zeigt ein Flugzeug.

### DETAILLIERTE DARSTELLUNG EXEMPLARISCHER AUSFÜHRUNGSFORMEN

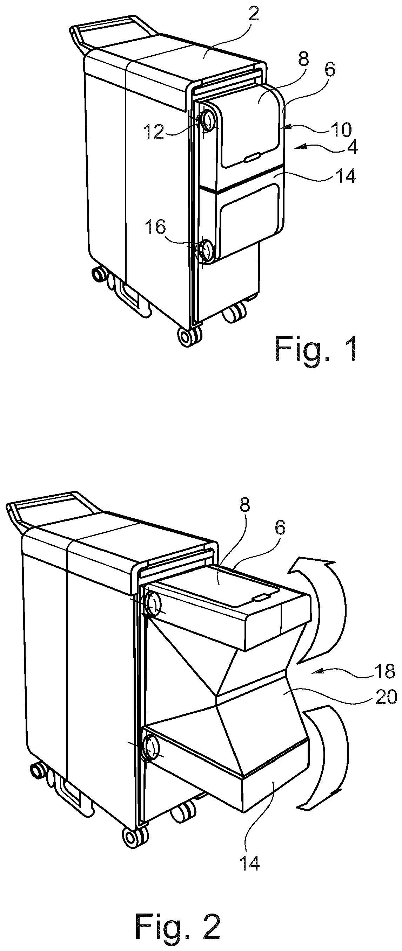

Fig. 1 zeigt einen Kabinen-Trolley 2 mit einer daran angeordneten Vorrichtung 4 zum Handhaben gefährlicher Objekte in einer geschlossenen Fahrzeugkabine. Eine hier nicht im Detail gezeigte Halteplatte ist mit dem Trolley 2 verbunden und kann die Vorrichtung 4 tragen, welche folglich stets in der Flugzeugkabine vorhanden sein und im Bedarfsfall verwendet werden kann. Ein Öffnungsrahmen 6 mit einer durch eine Klappe 8 verschließbaren Öffnung 10 ist über ein erstes Lager 12 schwenkbar an der Vorrichtung 4 angebunden. Auf einer dem ersten Lager 12 gegenüberliegenden Seite der Vorrichtung 4 ist eine Bodenplatte 14 an einem zweiten Lager 16 schwenkbar angeordnet. Der Öffnungsrahmen 6 und die Bodenplatte 14 können durch Bewegen um die Lager 12 und 16 jeweils um etwa 90° verschwenkt werden. Zwischen dem Öffnungsrahmen 6 und der Bodenplatte 14 wird folglich ein Zwischenraum definiert, in dem sich eine kompakttierbare Gehäusewanderung befindet. Diese wird in Fig. 2 gezeigt.

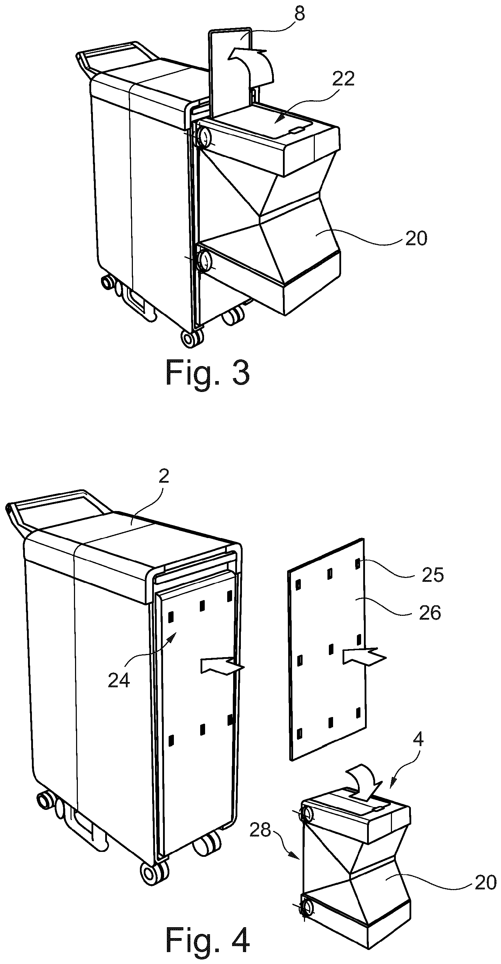

Hier sind der Öffnungsrahmen 6 und die Bodenplatte 14 jeweils um 90° verschwenkt und ein sich zwischen diesen Elementen ergebender Zwischenraum 18 wird von einer faltbaren Gehäusewandung 20 überspannt. Durch Öffnen der Klappe 8 kann ein Hohlraum im Inneren der Gehäusewandung 20 erreicht werden. Dies ist in Fig. 3 illustriert.

Die Gehäusewandung 20 weist bevorzugt ein feuerfestes Material auf, das etwa Kevlarfasern umfasst. Gegenstände, die eine starke Hitze entwickeln, können hier hinein gelegt werden, sodass von Ihnen keine unmittelbare Gefahr mehr ausgeht. Durch Schließen der Klappe 8 wird die Zufuhr von Sauerstoff unterbunden, sodass die Vorrichtung 4 auch als eine Art Feuerlöscheinrichtung fungiert.

In Fig. 4 wird der Kabinentrolley 2 gezeigt, der stirnseitig eine Haltevorrichtung 24 aufweist, die mit einer Halteplatte 26 verbindbar ist. Diese könnte entweder fest oder abnehmbar mit einer Rückseite 28 der Vorrichtung 4 verbunden sein. Die Haltevorrichtung 24 und die Halteplatte 26 können komplementär zueinander geformte Einrichtungen aufweisen, die beispielsweise Haken und Ausnehmungen umfassen. In dem gezeigten Ausführungsbeispiel weist die Halteplatte 26 ein Befestigungselement 25 in Form mehrerer Ausnehmungen auf, die in die Haltevorrichtung 24 einbringbar ist.

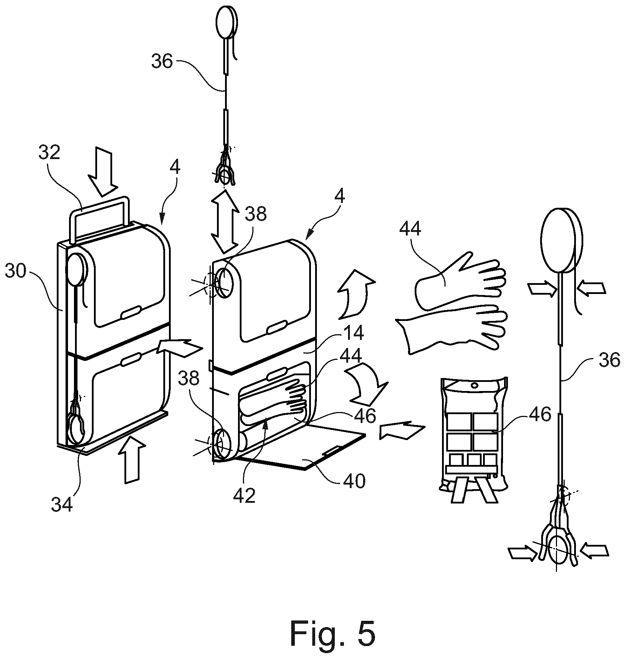

Wie in Fig. 5 dargestellt, ist die Vorrichtung 4 mit einer alternativen, daran angebrachter Halteplatte 30, die beispielhaft mit einem Tragegriff 32 und einer Aufstandsfläche 34 ausgestattet ist, ausgestattet. Damit kann die Vorrichtung 4 auch außerhalb eines Kabinentrolleys 2 oder einer anderen Einrichtung in der Flugzeugkabine aufgestellt werden. Zusätzlich dazu ist eine Greifzange 36 vorgesehen, welche an Haltern 38 anbringbar ist.

Die Bodenplatte 14 weist in diesen Ausführungsbeispielen eine Klappe 40 auf, die ein Staufach 42 verschließt. In diesem könnten unterschiedliche Einrichtungen vorgesehen sein, beispielsweise feuerfeste Handschuhe 44, eine Löschdecke 46 oder dergleichen.

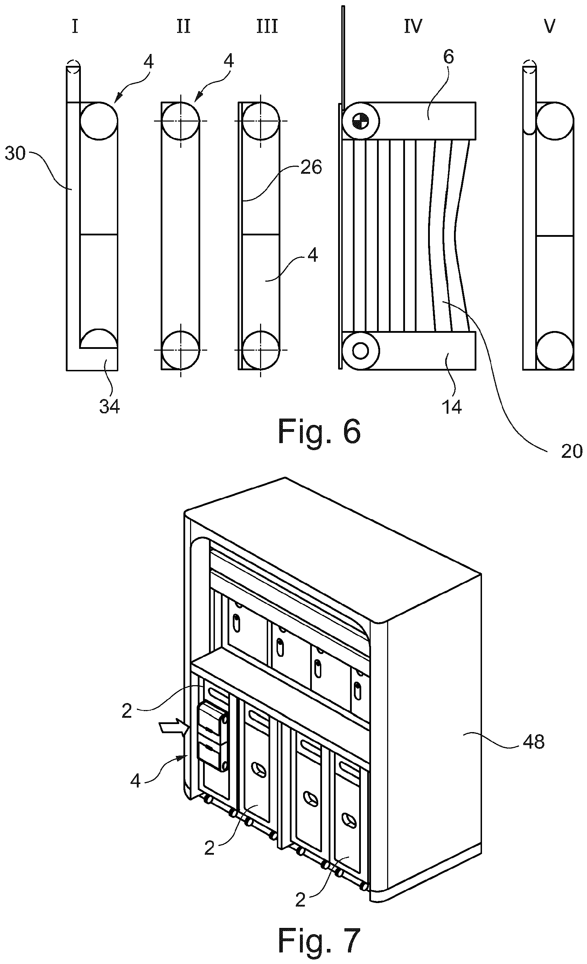

Fig. 6 zeigt verschiedene Ansichten I bis V der Vorrichtung 4. In I ist die Vorrichtung 4 mit der Halteplatte 30 in einer Seitenansicht gezeigt. In der Darstellung II ist die Vorrichtung 4 ohne jegliche Anbauten gezeigt und weist folglich lediglich die Wandung 20, den Öffnungsrahmen 8 und die Bodenplatte 14 auf. In III ist die zuvor gezeigte Halteplatte 26 angeordnet, die mit dem Trolley 2 verbindbar ist. In IV sind der Öffnungsrahmen 6 und die Bodenplatte 10 aufgeschwenkt. V zeigt indes die Variante aus der Darstellung I ohne eine Aufstandsfläche.

In Fig. 7 wird eine Bordküche 48 in einer Flugzeugkabine dargestellt, in der mehrere Trolleys 2 abgestellt sind. Hier ist die erfindungsgemäße Vorrichtung 4 an einem der Trolleys 2 befestigt. In dem dort gezeigten kompaktierten Zustand stört die Vorrichtung den üblichen Betriebsablauf an der Bordküche 48 nicht.

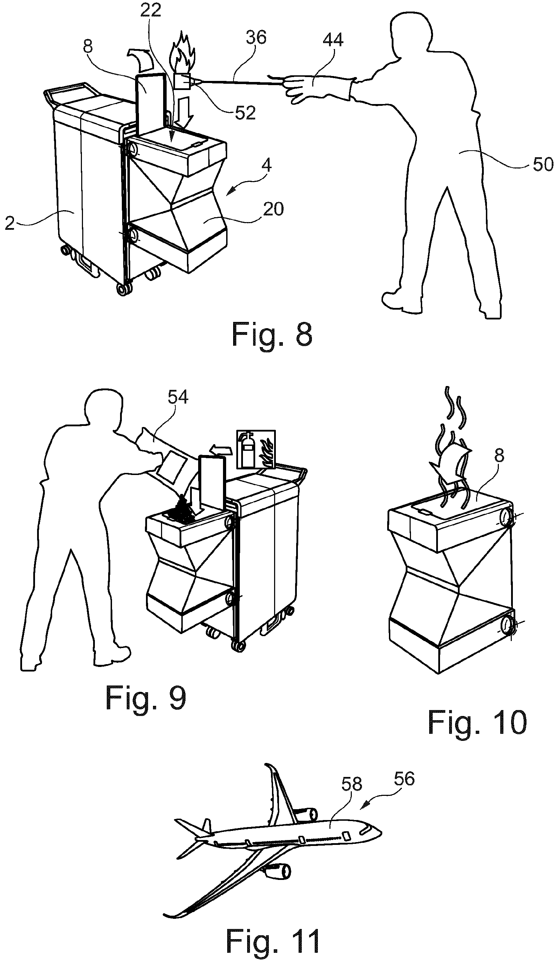

In einem Bedarfsfall, der in Figur 8 gezeigt ist, greift ein Benutzer 50 mit feuerfesten Handschuhen 44 mit der Greifzange 36 beispielhaft ein mobiles Elektronikgerät 52, das aufgrund einer Funktionsstörung eine starke Hitzeentwicklung zeigt. Die Vorrichtung 4 befindet sich an dem Trolley 2 und der Deckel 8 des Öffnungsrahmens 6 ist aufgeklappt. Die Gehäusewandung 20 ist auseinander gefaltet und der Benutzer 50 kann das Elektronikgerät 52 in den Hohlraum 22 einführen. Anschließend kann ein Löschgranulat 54 in den Hohlraum 22 eingefüllt werden, um den Brand zu löschen. Wie in Figur 10 gezeigt ist, wird der Deckel 8 anschließend geschlossen und von dem Elektronikgerät 52 geht keine Gefahr mehr aus.

Fig. 11 zeigt schließlich ein Flugzeug 56 mit einer Passagierkabine 58, in der eine derartige Vorrichtung 4 einsetzbar ist.

Ergänzend sei darauf hingewiesen, dass "aufweisend" keine anderen Elemente oder Schritte ausschließt, und "ein" oder "eine" keine Vielzahl ausschließt. Bezugszeichen in den Ansprüchen sind nicht als Einschränkung anzusehen.

### BEZUGSZEICHEN

- 2: Kabinen-Trolley
- 4: Vorrichtung
- 6: Öffnungsrahmen
- 8: Klappe
- 10: Öffnung
- 12: erstes Lager
- 14: Bodenplatte
- 16: zweites Lager
- 18: Zwischenraum
- 20: Gehäusewandung
- 22: Hohlraum
- 24: Haltevorrichtung
- 25: Befestigungselement
- 26: Halteplatte
- 28: Rückseite
- 30: Halteplatte
- 32: Tragegriff
- 34: Aufstandsfläche
- 36: Greifzange
- 38: Halter
- 40: Klappe
- 42: Staufach
- 44: Handschuh
- 46: Löschdecke
- 48: Bordküche
- 50: Benutzer
- 52: Elektronikgerät
- 54: Löschgranulat
- 56: Flugzeug
- 58: Passagierkabine

## Patentansprüche

1. Vorrichtung (2) zum Handhaben gefährlicher Objekte in einer geschlossenen Fahrzeugkabine (58), aufweisend:
- eine Halteplatte (26) zum Befestigen der Vorrichtung (2),
- eine an der Halteplatte (26) angeordnete kompaktierbare Gehäusewandung (20) aus einem feuerfesten Material, und
- einen zumindest mit der Gehäusewandung (20) verbundenen Öffnungsrahmen (6) mit einer verschließbaren Öffnung (10),
wobei die kompaktierbare Gehäusewandung (20) in einen kompaktierten Zustand und in einen expandierten Zustand bringbar ist,
wobei die Gehäusewandung (20) mit der Halteplatte (26) und dem Öffnungsrahmen (6) in einen ausgefalteten Zustand bringbar ist und in diesem einen Hohlraum (22) bereitstellt, der durch die Öffnung (10) von außerhalb der Gehäusewandung (20) erreichbar ist, und
wobei der Öffnungsrahmen (6) schwenkbar an der Halteplatte (26) angeordnet ist.

2. Vorrichtung (2) nach Anspruch 1,
wobei die Gehäusewandung (20) und der Öffnungsrahmen (6) im kompaktierten Zustand flach auf der Halteplatte (26) aufliegen.

3. Vorrichtung (2) nach Anspruch 2,
ferner aufweisend eine mit der Gehäusewandung (20) verbundene Bodenplatte (14), wobei die Bodenplatte (14) schwenkbar gegenüberliegend des Öffnungsrahmens (6) an der Halteplatte (26) angeordnet ist.

4. Vorrichtung (2) nach einem der vorhergehenden Ansprüche,
wobei die Gehäusewandung (20) faltbar ist und mehrere miteinander verbundene Wandungssegmente aufweist.

5. Vorrichtung (2) nach Anspruch 3,
wobei der Öffnungsrahmen (6) und die Bodenplatte (14) weitgehend dieselbe Grundfläche aufweisen.

6. Vorrichtung (2) nach einem der vorhergehenden Ansprüche,
wobei die Gehäusewandung (20) ein mit Kevlar verstärktes Material aufweist.

7. Vorrichtung (2) nach einem der vorhergehenden Ansprüche,
wobei die Halteplatte (26) ein lösbares Befestigungselement (25) zum Anordnen an einem Objekt (2) aufweist.

8. Vorrichtung (2) nach einem der vorhergehenden Ansprüche,
ferner aufweisend ein in den Hohlraum (22) einbringbares Granulat (54) zum Löschen eines Feuers in dem Hohlraum (22).

9. Vorrichtung (2) nach einem der vorhergehenden Ansprüche,
wobei der Öffnungsrahmen (6) aus einem feuerfesten Material besteht.

10. Vorrichtung (2) nach einem der vorhergehenden Ansprüche,
ferner aufweisend eine Greifzange (36) und einen Halter (38) zum Haltern der Greifzange (36) an einer Außenseite der Vorrichtung (2).

11. Vorrichtung (2) nach einem der vorhergehenden Ansprüche,
ferner aufweisend ein verschließbares Fach (42) zum Aufbewahren eines feuerfesten Handschuhs (44).

12. Vorrichtung (2) nach Anspruch 2 und 11,
wobei das verschließbare Fach (42) in die Bodenplatte (14) integriert ist.

13. Vorrichtung (2) nach einem der vorhergehenden Ansprüche,
wobei der ausgefaltete Zustand formstabil ist, sodass die Vorrichtung (2) in dem ausgefalteten Zustand selbstständig steht.

14. System zum Handhaben gefährlicher Objekte in einer geschlossenen Flugzeugkabine (58), aufweisend:
- einen Kabinentrolley (2) und
- mindestens eine Vorrichtung (2) nach einem der vorhergehenden Ansprüche,
wobei der Kabinentrolley (2) eine Haltevorrichtung (24) aufweist, in die Halteplatte (26) der Vorrichtung (2) einhängbar ist.

## Claims

1. Apparatus (2) for handling dangerous objects in a closed vehicle cabin (58), comprising:
- a retaining plate (26) for fastening of the apparatus (2),
- a housing wall (20) which is arranged on the retaining plate (26), which can be packed down and which is composed of a refractory material, and
- an opening frame (6) which is connected at least to the housing wall (20) and which has a closable opening (10),
wherein the housing wall (20) which can be packed down can be brought into a packed-down state and into an expanded state,
wherein the housing wall (20), together with the retaining plate (26) and the opening frame (6), can be brought into a folded-out state and in said state provides a cavity (22) which can be reached from outside of the housing wall (20) through the opening (10), and
wherein the opening frame (6) is pivotably arranged on the retaining plate (26).

2. Apparatus (2) according to Claim 1,
wherein, in the packed-down state, the housing wall (20) and the opening frame (6) rest flatly on the retaining plate (26).

3. Apparatus (2) according to Claim 2,
also comprising a base plate (14) which is connected to the housing wall (20), wherein the base plate (14) is pivotably arranged on the retaining plate (26) so as to lie opposite the opening frame (6).

4. Apparatus (2) according to one of the preceding claims,
wherein the housing wall (20) can be folded and has a plurality of connected-together wall segments.

5. Apparatus (2) according to Claim 3,
wherein the opening frame (6) and the base plate (14) have largely the same area.

6. Apparatus (2) according to one of the preceding claims,
wherein the housing wall (20) comprises a Kevlar-reinforced material.

7. Apparatus (2) according to one of the preceding claims,
wherein the retaining plate (26) has a releasable fastening element (25) for arrangement on an object (2).

8. Apparatus (2) according to one of the preceding claims,
also comprising a granular material (54), which can be introduced into the cavity (22), for extinguishing a fire in the cavity (22).

9. Apparatus (2) according to one of the preceding claims,
wherein the opening frame (6) is composed of a refractory material.

10. Apparatus (2) according to one of the preceding claims,
also comprising a gripper (36) and a holder (38) for holding the gripper (36) on an outer side of the apparatus (2) .

11. Apparatus (2) according to one of the preceding claims,
also comprising a closable compartment (42) for storing a fire-resistant glove (44).

12. Apparatus (2) according to Claims 2 and 11,
wherein the closable compartment (42) is integrated in the base plate (14).

13. Apparatus (2) according to one of the preceding claims,
wherein the folded-out state is dimensionally stable, and therefore the apparatus (2) stands up on its own in the folded-out state.

14. System for handling dangerous objects in a closed aircraft cabin (58), comprising:
- a cabin trolley (2) and
- at least one apparatus (2) according to one of the preceding claims,
wherein the cabin trolley (2) comprises a retaining apparatus (24) in which the retaining plate (26) of the apparatus (2) can be mounted.

## Revendications

1. Dispositif (2) de manutention d'objets dangereux dans une cabine fermée (58) de véhicule, comprenant :
- une plaque de support (26) pour fixer le dispositif (2),
- une paroi de boîtier compactable (20) en matériau résistant au feu, disposée sur la plaque de support (26), et
- un cadre d'ouverture (6) relié au moins à la paroi de boîtier (20) et comportant une ouverture (10) apte à être fermée,
la paroi de boîtier compactable (20) étant apte à être amenée dans un état compact et dans un état déployé,
la paroi de boîtier (20) étant apte à être amenée avec la plaque de maintien (26) et le cadre d'ouverture (6) dans un état déployé et aménageant dans celui-ci un espace creux (22) qui peut être atteint par l'ouverture (10) depuis l'extérieur de la paroi de boîtier (20), et
le cadre d'ouverture (6) étant disposé de manière pivotante sur la plaque de maintien (26).

2. Dispositif (2) selon la revendication 1,
dans lequel la paroi du boîtier (20) et le cadre d'ouverture (6) reposent à plat sur la plaque de maintien (26) à l'état compact.

3. Dispositif (2) selon la revendication 2,
présentant en outre une plaque de fond (14) reliée à la paroi de boîtier (20), la plaque de fond (14) étant agencée sur la plaque de maintien (26) de manière à être apte à pivoter à l'opposé du cadre d'ouverture (6).

4. Dispositif (2) selon l'une des revendications précédentes,
dans lequel la paroi du boîtier (20) est pliable et présente une pluralité de segments de paroi reliés les uns aux autres.

5. Dispositif (2) selon la revendication 3,
dans lequel le cadre d'ouverture (6) et la plaque de fond (14) présentent sensiblement la même surface de base.

6. Dispositif (2) selon l'une des revendications précédentes,
dans lequel la paroi du boîtier (20) comprend un matériau renforcé par du Kevlar.

7. Dispositif (2) selon l'une des revendications précédentes,
dans lequel la plaque de maintien (26) comporte un élément de fixation amovible (25) destiné à être placé sur un objet (2).

8. Dispositif (2) selon l'une des revendications précédentes,
comprenant en outre des granulés (54) apte à être placés dans la cavité (22) pour éteindre un feu dans la cavité (22).

9. Dispositif (2) selon l'une des revendications précédentes,
dans lequel le cadre d'ouverture (6) est constitué d'un matériau résistant au feu.

10. Dispositif (2) selon l'une des revendications précédentes,
comprenant en outre une pince de préhension (36) et un support (38) pour supporter la pince de préhension (36) sur un côté extérieur du dispositif (2).

11. Dispositif (2) selon l'une des revendications précédentes,
comprenant en outre un compartiment verrouillable (42) pour le rangement d'un gant (44) résistant au feu.

12. Dispositif (2) selon les revendications 2 et 11,
dans lequel le compartiment verrouillable (42) est intégré à la plaque de base (14).

13. Dispositif (2) selon l'une des revendications précédentes,
dans lequel l'état déployé est dimensionnellement stable, de sorte que le dispositif (2) tient debout de manière autonome dans l'état déployé.

14. Système de manutention d'objets dangereux dans une cabine fermée (58) d'avion, comprenant :
- un chariot de cabine (2) et
- au moins un dispositif (2) selon l'une des revendications précédentes, le chariot de cabine (2) présentant un dispositif de retenue (24) dans lequel peut être accrochée la plaque de maintien (26) du dispositif (2) .
